# EUROPEAN PATENT APPLICATION

(11) **EP 4 629 678 A1**
(43) Date of publication of application: **08.10.2025**
(21) Application number: 23896358.1
(22) Date of filing: 30.10.2023
(51) Int. Cl.: H04W 12/069

(54) **ACCESS POINT AUTHENTICATION METHOD, APPARATUS, AND READABLE STORAGE MEDIUM**

(30) Priority: 28.11.2022 CN 202211503692
(71) Applicant: Datang Mobile Communications Equipment Co., Ltd., Beijing 100085 (CN)
(72) Inventor: LIANG, Yacong, Beijing 100085 (CN); WANG, Hucheng, Beijing 100085 (CN); CHEN, Shanzhi, Beijing 100085 (CN)
(74) Representative: Studio Torta S.p.A.
(86) International application number: PCT/CN2023/127471
(87) International publication number: WO 2024/114204

(57) **Abstract**

The present disclosure relates to the technical field of communications. Provided are an access point authentication method, an apparatus, and a readable storage medium. The method comprises: sending to a CCU or a core network device a first request, the first request being used for requesting the CCU or the core network device to authenticate a first AP; and receiving an authentication result for the first AP sent by the CCU or the core network device.

## Description

### CROSS-REFERENCE TO RELATED APPLICATION

This application claims the priority of Chinese Patent Application No. 202211503692.2 entitled "Access Point Authentication Method, Apparatus, and Readable Storage Medium," filed November 28, 2022, the disclosure of which is incorporated herein by reference in its entirety.

### TECHNICAL FIELD

The present disclosure relates to the field of communications technologies, and in particular, to an access point (Access Point) authentication method and apparatus, and a readable storage medium.

### BACKGROUND

Under a User-Centric Mobile Network (UCMN) network architecture, the coverage of an access point is small, the function of the access point is diversified and the number of access points is large, and will be developed in the direction of plug-and-play in the future. Due to the flexible and diverse deployment modes of the access point (AP), the difficulty of managing the AP is increased, and there is an uncontrollable security threat. To this end, the AP needs to be authenticated.

At present, dual two-way authentication is adopted when the AP is authenticated. However, due to a large number of APs, signaling flows in this manner are significant, resulting in an increase in network delay.

### SUMMARY

Embodiments of the present disclosure provide an access point authentication method and apparatus, and a readable storage medium, to reduce network delay.

In a first aspect, An access point authentication method applied to a terminal is provided, wherein the method includes: sending a first request to a cloud control unit CCU or a core network device, wherein the first request is used to request the CCU or the core network device to authenticate a first access point AP; and receiving an authentication result of the first AP from the CCU or the core network device; wherein the authentication result is obtained by the CCU or the core network device through authenticating the first AP based on first authentication information obtained from an authentication information storage device.

In some embodiments, the sending a first request to a CCU or a core network device includes: sending the first request to the CCU or the core network device through a second AP, wherein the first request carries second authentication information, and the second authentication information includes a second digital certificate of the first AP; or sending a measurement report message to the CCU through a second AP, wherein the first request includes the measurement report message; wherein the second AP is an authenticated AP.

In some embodiments, the method further includes: obtaining the second digital certificate from the first AP.

In a second aspect, an access point authentication method applied to a CCU or a core network device is provided. The method includes: obtaining second authentication information of a first AP; obtaining first authentication information of the first AP from an authentication information storage device; authenticating the first AP according to the second authentication information and the first authentication information to obtain an authentication result; and sending the authentication result to a terminal.

In some embodiments, the second authentication information includes a second digital certificate or a second digital certificate hash value; the obtaining the second authentication information of the first AP includes: receiving a first request from the terminal through a second AP, wherein the first request carries the second authentication information, and the second authentication information includes a second digital certificate of the first AP; or receiving a measurement report message from the terminal through a second AP; obtaining a second digital certificate of the first AP from the first AP according to the measurement report message; or receiving the first request from the terminal through a second AP, wherein the first request carries the second authentication information, and the second authentication information includes a second digital certificate of the first AP; determining a second digital certificate hash value of the second digital certificate; wherein the second AP is an authenticated AP.

In some embodiments, the first authentication information includes a first digital certificate or a first digital certificate hash value; the obtaining the first authentication information of the first AP from the authentication information storage device includes: obtaining a first digital certificate of the first AP from the authentication information storage device; or obtaining a first digital certificate hash value of the first AP from the authentication information storage device.

In some embodiments, the second authentication information includes a second digital certificate of the first AP, and the first authentication information includes a first digital certificate of the first AP; the authenticating the first AP according to the second authentication information and the first authentication information to obtain an authentication result includes: comparing the first digital certificate with the second digital certificate to obtain the authentication result.

In some embodiments, the second authentication information includes a second digital certificate hash value of the first AP, and the first authentication information includes a first digital certificate hash value of the first AP; the authenticating the first AP according to the second authentication information and the first authentication information to obtain an authentication result includes: comparing the first digital certificate hash value with the second digital certificate hash value to obtain the authentication result.

In some embodiments, the method further includes: storing a digital certificate and/or a digital certificate hash value of a AP in a domain corresponding to the CCU or the core network device into the authentication information storage device.

In some embodiments, the authentication information storage device includes a blockchain.

In a third aspect, an access point authentication method applied to a first AP is provided. The method includes: sending a second request to a terminal, wherein the second request is used to indicate that the first AP is A to-be-authenticated AP; sending second authentication information to a terminal or a CCU, wherein the second authentication information is sent to the CCU or a core network device through the terminal, or directly sent to the CCU, and the CCU or the core network device authenticates the first AP based on the first authentication information obtained from the authentication information storage device.

In some embodiments, sending the second authentication information to the CCU includes: receiving a third request of the CCU; sending the second authentication information to the CCU in response to the third request, wherein the second authentication information includes a second digital certificate of the first AP.

In a fourth aspect, an access point authentication apparatus applied to a terminal is provided, wherein the apparatus includes a memory, a transceiver, and a processor, the memory is configured to store a computer program; the transceiver is configured to send and receive data under control of the processor; and the processor is configured to read the computer program in the memory and perform the following operations: sending a first request to a cloud control unit CCU or a core network device, wherein the first request is used to request the CCU or the core network device to authenticate a first access point AP; receiving an authentication result of the first AP from the CCU or the core network device; wherein the authentication result is obtained by the CCU or the core network device through authenticating the first AP based on first authentication information obtained from an authentication information storage device.

In a fifth aspect, an access point authentication apparatus applied to a CCU or a core network device is provided, wherein the apparatus includes a memory, a transceiver, and a processor, the memory is configured to store a computer program; the transceiver is configured to send and receive data under control of the processor; and the processor is configured to read the computer program in the memory and perform the following operations: obtaining second authentication information of the first AP; obtaining first authentication information of the first AP from an authentication information storage device; authenticating the first AP according to the second authentication information and the first authentication information to obtain an authentication result; sending the authentication result to a terminal.

In a sixth aspect, an access point authentication apparatus applied to a first AP is provided, wherein the apparatus includes a memory, a transceiver, and a processor, the memory is configured to store a computer program; the transceiver is configured to send and receive data under control of the processor; and the processor is configured to read the computer program in the memory and perform the following operations: sending a second request to a terminal, wherein the second request is used to indicate that the first AP is A to-be-authenticated AP; sending second authentication information to a terminal or a CCU, wherein the second authentication information is sent to the CCU or a core network device through the terminal, or directly sent to the CCU, and the CCU or the core network device authenticates the first AP based on the first authentication information obtained from the authentication information storage device.

In a seventh aspect, an access point authentication apparatus applied to a terminal, wherein the apparatus includes: a first sending unit, configured to send a first request to a cloud control unit CCU or a core network device, wherein the first request is used to request the CCU or the core network device to authenticate a first access point AP; a first receiving unit, configured to receive an authentication result of the first AP from the CCU or the core network device; wherein the authentication result is obtained by the CCU or the core network device through authenticating the first AP based on first authentication information obtained from an authentication information storage device.

In an eighth aspect, an access point authentication apparatus applied to a CCU or a core network device is provided, the apparatus includes: a first obtaining unit, configured to obtain second authentication information of a first AP; a second obtaining unit, configured to obtain first authentication information of the first AP from an authentication information storage device; a first authentication unit, configured to authenticate the first AP according to the second authentication information and the first authentication information to obtain an authentication result; a first sending unit, configured to send the authentication result to a terminal.

In a ninth aspect, an access point authentication apparatus applied to a first AP is provided, the apparatus includes: a first sending unit, configured to send a second request to a terminal, wherein the second request is used to indicate that the first AP is A to-be-authenticated AP; a second sending unit, configured to send second authentication information to a terminal or a CCU, wherein the second authentication information is sent to the CCU or a core network device through the terminal, or directly sent to the CCU, and the CCU or the core network device authenticates the first AP based on the first authentication information obtained from the authentication information storage device.

In a tenth aspect, a communication device is provided. The communication device includes a transceiver, s memory, a processor, and a program stored on the processor and executable on the processor, and when the processor executes the program, the processor implements steps of the access point authentication method according to the above.

In an eleventh aspect, a processor-readable storage medium is provided, wherein the processor-readable storage medium stores a computer program, and the computer program is configured to cause a processor to execute steps of the access point authentication method according to the above.

In the embodiments of the present disclosure, the CCU or the core network device authenticates the first AP according to the first authentication information obtained from the authentication information storage device, to obtain an authentication result, thereby simplifying the signaling interaction process and reducing the network delay.

### BRIEF DESCRIPTION OF THE DRAWINGS

FIG. 1 is a schematic diagram of an architecture of a UCM network;
FIG. 2 is a first flowchart of an access point authentication method according to an embodiment of the present disclosure;
FIG. 3 is a second flowchart of an access point authentication method according to an embodiment of the present disclosure;
FIG. 4 is a third flowchart of an access point authentication method according to an embodiment of the present disclosure;
FIG. 5 is a fourth flowchart of an access point authentication method according to an embodiment of the present disclosure;
FIG. 6 is a schematic diagram of an application scenario according to an embodiment of the present disclosure;
FIG. 7 is a fifth flowchart of an access point authentication method according to an embodiment of the present disclosure;
FIG. 8 is a sixth flowchart of an access point authentication method according to an embodiment of the present disclosure;
FIG. 9 is a second schematic diagram of an application scenario according to an embodiment of the present disclosure;
FIG. 10 is a third schematic diagram of an application scenario according to an embodiment of the present disclosure;
FIG. 11 is a seventh flowchart of an access point authentication method according to an embodiment of the present disclosure;
FIG. 12 is a fourth schematic diagram of an application scenario according to an embodiment of the present disclosure;
FIG. 13 (a) is a fifth schematic diagram of an application scenario according to an embodiment of the present disclosure;
FIG. 13 (b) is an eighth flowchart of an access point authentication method according to an embodiment of the present disclosure;
FIG. 14 is a first structural diagram of an access point authentication apparatus according to an embodiment of the present disclosure;
FIG. 15 is a second structural diagram of an access point authentication apparatus according to an embodiment of the present disclosure;
FIG. 16 is a third structural diagram of an access point authentication apparatus according to an embodiment of the present disclosure;
FIG. 17 is a fourth structural diagram of an access point authentication apparatus according to an embodiment of the present disclosure;
FIG. 18 is a fifth structural diagram of an access point authentication apparatus according to an embodiment of the present disclosure;
FIG. 19 is a sixth structural diagram of an access point authentication apparatus according to an embodiment of the present disclosure;
FIG. 20 is a seventh structural diagram of an access point authentication apparatus according to an embodiment of the present disclosure;
FIG. 21 is an eighth structural diagram of an access point authentication apparatus according to an embodiment of the present disclosure.

### DETAILED DESCRIPTION

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of" means two or more, and other quantifiers are similar.

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

Embodiments of the present disclosure provide an access point authentication method and apparatus, and a readable storage medium, to reduce network delay.

The method and the apparatus are based on the same application concept, and because the method and the apparatus solve a similar principle of a problem, the implementation of the apparatus and the method may refer to each other, and details are not described herein again.

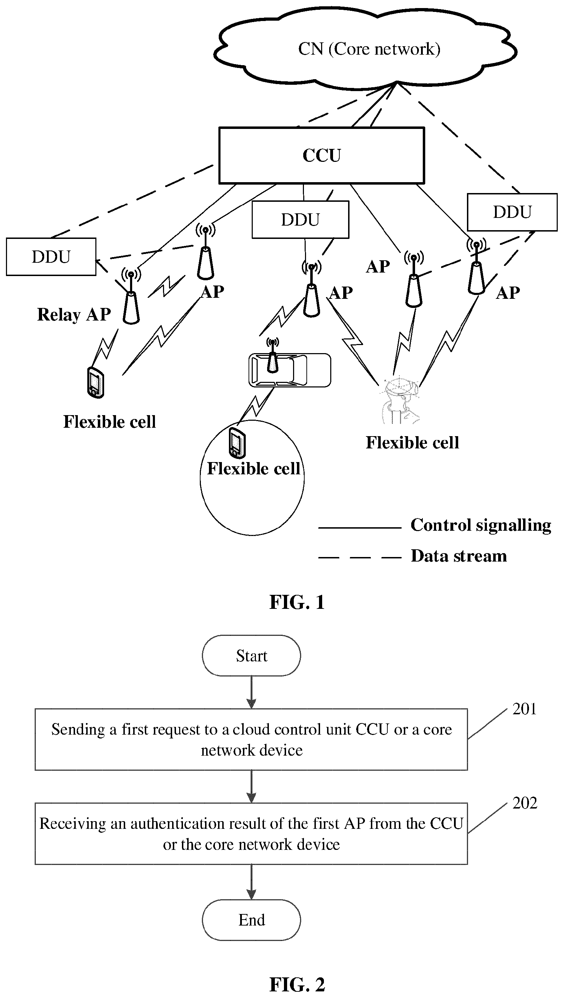

Referring to FIG. 1, FIG. 1 is a schematic architectural diagram of a UCMN network. The network includes following:
a cloud-based control unit (CCU) which includes a management plane and a control plane. The CCU functions include traditional control plane functions, such as system information management related to access stratum (AS)/non-access stratum (NAS); paging control; radio resource control (RRC) connection establishment, maintenance and release; security functions including key management; bearer management; mobility management; user equipment (UE) measurement report management; NAS information transmission, and the like. Unlike a 5th-generation (5G) mobile communication (5th-generation, 5G) central unit (CU), it does not have a user plane function. In addition, the CCU also performs specific functions of UCMN, such as UE context management, AP management and selection, etc;
Distributed Data Unit (DDU): user plane anchor. A central unit (CU)-user plane (UP) function in the related art is located in the DDU. DDU also undertakes some functions of resource management and AP node selection, such as Layer 1 (L1) measurement management and dynamic resource scheduling;
an AP which is a Radio Access Network (RAN) access point, and is directly connected to a User Equipment (UE), also referred to as a terminal.

The UCMN network implements the concept of "network follows a user". A single user can always obtain the best service that can be provided by the network nodes around the location of the user. A concept of a flexible cell is introduced, and the terminal is always in the center of the flexible cell. One or more access nodes (APs) are associated around the terminal, and the plurality of APs together serve the terminal, wherein the AP set constituting the flexible cell dynamically changes according to the mobility, the service change, or the channel change of the user; and the scheduling and transmission are solved by a unique terminal identifier (UE-Identifier, UE-ID), regardless of a single AP identifier or a cell-specific terminal identifier.

The following describes an implementation process of an access point authentication method according to an embodiment of the present disclosure with reference to different embodiments.

Referring to FIG. 2, FIG. 2 is a flowchart of an access point authentication method according to an embodiment of the present disclosure, the method is applied to a terminal, as shown in FIG. 2, the method includes the following steps.

Step 201: sending a first request to a cloud control unit CCU or a core network device, wherein the first request is used to request the CCU or the core network device to authenticate a first access point AP.

The first AP refers to A to-be-authenticated AP. If the first AP request requests to be added to another domain, the first AP may send a broadcast message to the terminal, to indicate that the first AP requests to join another domain or indicate that the first AP is A to-be-authenticated AP. In some embodiments, the broadcast message may further include authentication information to be authenticated for the first AP, such as a digital certificate. In the embodiment of the present disclosure, the authentication information to be authenticated for the first AP is used as the second authentication information. Certainly, the second authentication information may further include other content, for example, a hash value of the digital certificate of the first AP, in the embodiments of the present disclosure.

A domain where the CCU or the core network device (for example, may be an Authentication Server Function (AUSF)) is located is a domain trusted by the terminal. In the embodiments of the present disclosure, both the CCU and the core network device may authenticate the AP. For example, in a scenario where multiple CCUs are connected to the same core network, each domain has a CCU, and if an AP in one domain needs to be added to another domain (a domain trusted by the terminal), the CCU in the other domain may authenticate the AP. For example, in a scenario where multiple CCUs are connected to different core networks, different core networks represent different domains. Each domain has a core network device, CCU. If the AP in one domain needs to be added to another domain (the domain trusted by the terminal), the core network device or CCU in the another domain may authenticate the AP. The two cases described above may be referred to as cross-domain authentication. In addition to cross-domain authentication, the APs in the same domain may also be authenticated. In this case, the CCU in the domain may authenticate the AP.

In this step, the terminal may send the first request to the CCU or the core network device through the second AP based on the broadcast message of the first AP, where the first request carries second authentication information, and the second authentication information includes the second digital certificate of the first AP. The second AP is an authenticated AP. For an intra-domain authentication scenario, the first request includes a measurement report message of the terminal. The terminal may send a measurement report message to the CCU through the second AP to indicate that the first AP needs to be authenticated.

In some embodiments, in the embodiments of the present disclosure, the terminal may further obtain, through the broadcast message of the first AP, the digital certificate of the first AP which is referred to herein as the second digital certificate.

Step 202: receiving an authentication result of the first AP from the CCU or the core network device; wherein the authentication result is obtained by the CCU or the core network device through authenticating the first AP based on first authentication information obtained from an authentication information storage device.

In this embodiment of the present disclosure, the authentication information storage device is configured to store authentication information of the authenticated AP, such as a digital certificate and a digital certificate hash value, and may provide a digital certificate or a digital certificate hash value of the to-be-authenticated AP to the CCU or the core network device according to the request of the CCU or the core network device. Meanwhile, the authentication information storage device may further ensure the security of the stored authentication information. Optionally, in this embodiment of the present disclosure, a blockchain may be used as an authentication information storage device. Therefore, the above functions can be conveniently implemented by using the characteristics of the blockchain.

After obtaining the authentication result of the first AP, if the authentication result indicates that the authentication succeeds, the terminal may access the first AP, otherwise, the terminal may not access the first AP.

In the embodiments of the present disclosure, the CCU or the core network device authenticates the first AP according to the first authentication information obtained from the authentication information storage device to obtain an authentication result, thereby simplifying the signaling interaction process and reducing the network delay.

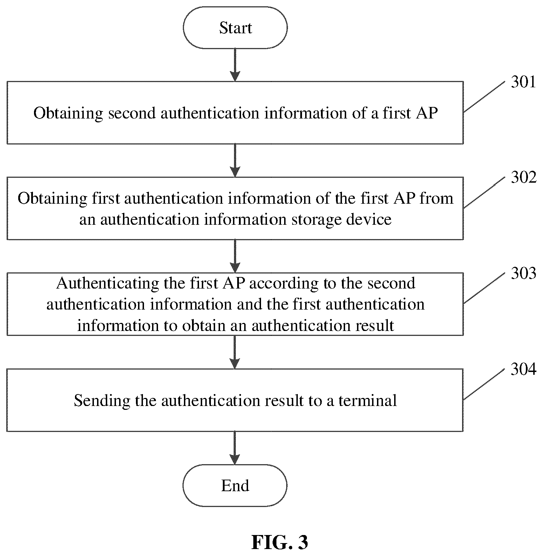

Referring to FIG. 3, FIG. 3 is a flowchart of an access point authentication method according to an embodiment of the present disclosure, the method is applied to a CCU, as shown in FIG. 3, the method includes the following steps:
Step 301: obtaining second authentication information of a first AP.

In this embodiment of the present disclosure, the second authentication information includes a second digital certificate or a second digital certificate hash value. A hash algorithm is a method for creating a small digital fingerprint from any file, it is difficult to find two different plaintext segments such that their hash values are consistent, and a characteristic that any large file is mapped to a fixed length makes the hash algorithm be widely used in security verification and also used in information authentication.

If the second authentication information includes the second digital certificate, the CCU may receive the first request sent by the terminal through the second AP, where the first request carries the second authentication information, and the second authentication information includes the second digital certificate of the first AP; or, the CCU may receive a measurement report message sent by the terminal through the second AP, and obtain the second digital certificate of the first AP from the first AP according to the measurement report message. The second AP is an authenticated AP. Certainly, the CCU may further obtain the second digital certificate in other manners, which is merely an example to describe several possible implementations.

If the second authentication information includes the second digital certificate hash value, the CCU may receive the first request sent by the terminal through the second AP, where the first request carries the second authentication information, and the second authentication information includes the second digital certificate of the first AP. The CCU determines a second digital certificate hash value of the second digital certificate based on the obtained second digital certificate. That is, in this manner, after obtaining the second digital certificate, the CCU determines by itself the hash value of the second digital certificate. In the embodiments of the present disclosure, the CCU may obtain the hash value of the second digital certificate in various manners, which is not limited in the embodiments of the present disclosure.

Step 302: obtaining first authentication information of the first AP from an authentication information storage device.

As described above, in the embodiment of the present disclosure, the authentication information storage device is configured to store authentication information of the authenticated AP, such as a digital certificate and a digital certificate hash value, and may provide a digital certificate or a digital certificate hash value of the to-be-authenticated AP to the CCU or the core network device according to the request of the CCU or the core network device. At the same time, the authentication information storage device also needs to ensure the security of the stored authentication information. Optionally, in this embodiment of this application, a blockchain may be used as an authentication information storage device. Therefore, the above functions can be conveniently implemented by using the characteristics of the blockchain.

In this step, the CCU may obtain the first authentication information of the first AP from the authentication information storage device according to the second authentication information. For example, the CCU may send the identifier of the first AP to the authentication information storage device through the proxy server, to obtain the first authentication information of the first AP. The first authentication information includes a first digital certificate or a first digital certificate hash value. Then, correspondingly, the CCU may obtain the first digital certificate of the first AP from the authentication information storage device; or obtain the first digital certificate hash value of the first AP from the authentication information storage device.

Step 303: authenticating the first AP according to the second authentication information and the first authentication information to obtain an authentication result.

In this step, the CCU may compare the digital certificate or compare the hash value of the digital certificate.

If the second authentication information includes the second digital certificate of the first AP, and the first authentication information includes the first digital certificate of the first AP, the CCU may compare the first digital certificate with the second digital certificate to obtain the authentication result. That is, in this manner the digital certificates are compared. If the two are consistent, the authentication result is that the authentication succeeds; otherwise, the authentication is not passed.

If the second authentication information includes the second digital certificate hash value of the first AP, and the first authentication information includes the first digital certificate hash value of the first AP, the CCU may compare the first digital certificate hash value with the second digital certificate hash value to obtain the authentication result. That is, in this manner, the digital certificate hash values are compared. If the two are consistent, the authentication result is that the authentication succeeds; otherwise, the authentication is not passed.

Step 304: sending the authentication result to a terminal.

In the embodiments of the present disclosure, the manner of sending the authentication result to the terminal by the CCU is not limited. For example, the CCU may implicitly or explicitly indicate or send the authentication result to the terminal. Specifically, the CCU may directly send the authentication result to the terminal; or send an indication to the terminal, and indicate different contents of the authentication result by using different values of the indication.

Optionally, in this embodiment of the present disclosure, in order to improve the authentication efficiency, the CCU may further store the digital certificates and/or the digital certificate hash values of the APs in the domain to which the CCU belongs, into the authentication information storage device. By storing the hash value of the digital certificate, the storage space of the authentication information storage device can be saved, and the requirement for the storage capability of the authentication information storage device can be reduced.

In the embodiments of the present disclosure, the CCU or the core network device authenticates the first AP according to the first authentication information obtained from the authentication information storage device to obtain an authentication result, thereby simplifying the signaling interaction process and reducing the network delay.

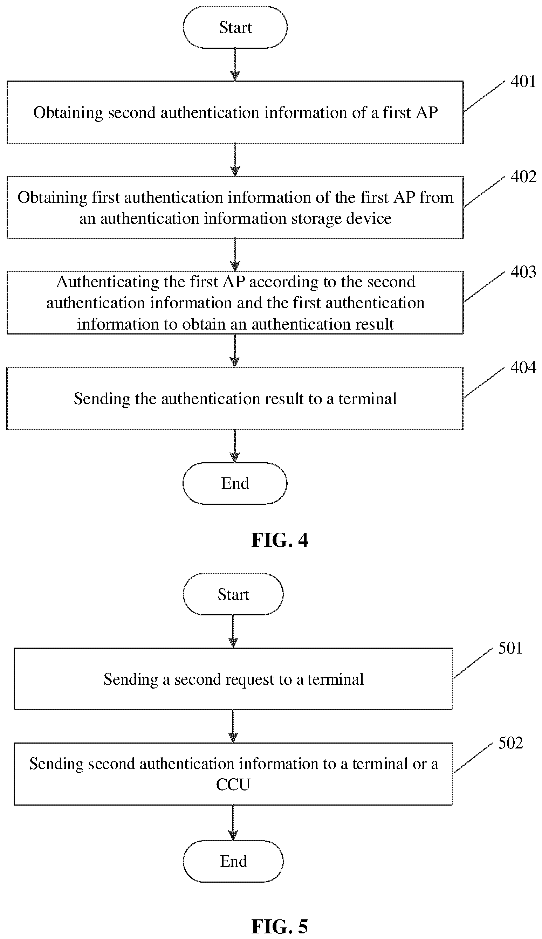

Referring to FIG. 4, FIG. 4 is a flowchart of an access point authentication method according to an embodiment of the present disclosure, the method is applied to a core network device, as shown in FIG. 4, the method includes the following steps:
Step 401: obtaining second authentication information of a first AP.

In this embodiment of the present disclosure, the second authentication information includes a second digital certificate or a second digital certificate hash value.

If the second authentication information includes the second digital certificate, the core network device may receive the first request sent by the terminal through the second AP, where the first request carries the second authentication information, and the second authentication information includes the second digital certificate of the first AP. The second AP is an authenticated AP. Certainly, the core network device may further obtain the second digital certificate in other manners, which is merely an example to describe several possible implementations.

If the second authentication information includes the second digital certificate hash value, the core network device may receive the first request sent by the terminal through the second AP, where the first request carries the second authentication information, and the second authentication information includes the second digital certificate of the first AP. The core network device determines a second digital certificate hash value of the second digital certificate based on the obtained second digital certificate. That is, in this manner, after obtaining the second digital certificate, the core network device determines by itself the second digital certificate hash value by itself. In the embodiments of the present disclosure, the core network device may obtain the hash value of the second digital certificate in various manners, which is not limited in the embodiments of the present disclosure.

Step 402: obtaining first authentication information of the first AP from an authentication information storage device.

As described above, in the embodiment of the present disclosure, the authentication information storage device is configured to store authentication information of the authenticated AP, such as a digital certificate and a digital certificate hash value, and may provide a digital certificate or a digital certificate hash value of the to-be-authenticated AP to the core network device or the core network device according to the request of the core network device or the core network device. At the same time, the authentication information storage device also needs to ensure the security of the stored authentication information. Optionally, in this embodiment of the present disclosure, a blockchain may be used as an authentication information storage device. Therefore, the above functions can be conveniently implemented by using the characteristics of the blockchain.

In this step, the core network device may obtain the first authentication information of the first AP from the authentication information storage device based on the second authentication information. For example, the core network device may send the identifier of the first AP to the authentication information storage device to obtain the first authentication information of the first AP. The first authentication information includes a first digital certificate or a first digital certificate hash value. Then, correspondingly, the core network device may obtain the first digital certificate of the first AP from the authentication information storage device; or obtain the first digital certificate hash value of the first AP from the authentication information storage device.

Step 403: authenticating the first AP according to the second authentication information and the first authentication information to obtain an authentication result.

In this step, the core network device may compare the digital certificate or compare the digital certificate hash value.

If the second authentication information includes the second digital certificate of the first AP, and the first authentication information includes the first digital certificate of the first AP, the core network device may compare the first digital certificate with the second digital certificate to obtain the authentication result. That is, in this manner the digital certificates are compared. If the two are consistent, the authentication result is that the authentication succeeds; otherwise, the authentication is not passed.

If the second authentication information includes the second digital certificate hash value of the first AP, and the first authentication information includes the first digital certificate hash value of the first AP, the core network device may compare the first digital certificate hash value with the second digital certificate hash value to obtain the authentication result. That is, in this manner the digital certificate hash values are compared. If the two are consistent, the authentication result is that the authentication succeeds; otherwise, the authentication is not passed.

Step 404: sending the authentication result to a terminal.

In this embodiment of the present disclosure, a manner in which the core network device sends the authentication result to the terminal is not limited. For example, the core network device may implicitly or explicitly indicate or send the authentication result to the terminal. Specifically, the core network device may directly send the authentication result to the terminal; or send an indication to the terminal, and indicate different contents of the authentication result by using different values of the indication.

Optionally, in this embodiment of the present disclosure, in order to improve the authentication efficiency, the core network device may further store the digital certificates and/or the digital certificate hash values of the APs in the domain to which the core network device belongs, into the authentication information storage device.

In this embodiment of the present disclosure, the core network device is used to authenticate the first AP according to the first authentication information obtained from the authentication information storage device to obtain an authentication result, thereby simplifying the signaling interaction process and reducing the network delay.

Referring to FIG. 5, FIG. 5 is a flowchart of an access point authentication method according to an embodiment of the present disclosure, the method is applied to a first AP, as shown in FIG. 5, the method includes the following steps:
Step 501: sending a second request to a terminal, wherein the second request is used to indicate that the first AP is A to-be-authenticated AP.

The second request may be implemented in a form of a broadcast message, and may carry to-be-authenticated information of the first AP, such as a digital certificate.

Step 502: sending second authentication information to a terminal or a CCU, wherein the second authentication information is sent to the CCU or a core network device through the terminal, or directly sent to the CCU, and the CCU or the core network device authenticates the first AP based on the first authentication information obtained from the authentication information storage device.

As described above, the CCU or the core network device may authenticate the first AP. In different authentication manners, the first AP may send second authentication information to different concrete transmitters. For example, if the CCU performs authentication, the first AP may send the second authentication information to the terminal, and the terminal send the second authentication information to the CCU, or the first AP may directly send the second authentication information to the CCU based on a request of the CCU. For example, the first AP receives a third request of the CCU, and sends the second authentication information to the CCU in response to the third request, where the second authentication information includes a second digital certificate of the first AP.

If the core network device performs authentication, the first AP may send the second authentication information to the terminal, and the terminal sends the second authentication information to the core network device.

In this embodiment of the present disclosure, the core network device is used to authenticate the first AP according to the first authentication information obtained from the authentication information storage device to obtain an authentication result, thereby simplifying the signaling interaction process and reducing the network delay.

In a bidirectional authentication manner in the related art, first, a representative node AP is selected from an access point set (APG) as a representative, and a network bidirectional authentication between the terminal and the LSC (Location Services) is performed. After the terminal performs network authentication with the LSC, in order to ensure that the user accesses the legal AP, the terminal performs access layer bidirectional authentication with the target AP again. Therefore, in the foregoing process, each time the terminal switches to the AP of a different operator, network layer bidirectional authentication and access layer bidirectional authentication are performed once, so that the interaction process is more, the network authentication efficiency is reduced, the switching speed between the APs is reduced, and the user experience is reduced. In addition, in this process, after the authentication with the LSC, in order to determine the legitimacy of the AP, the terminal needs to authenticate with the AP again, thereby consuming the power of the terminal and occupying a large amount of resources of the terminal.

To this end, in the embodiments of the present disclosure, a solution for authenticating an AP through a CCU or a core network device is proposed.

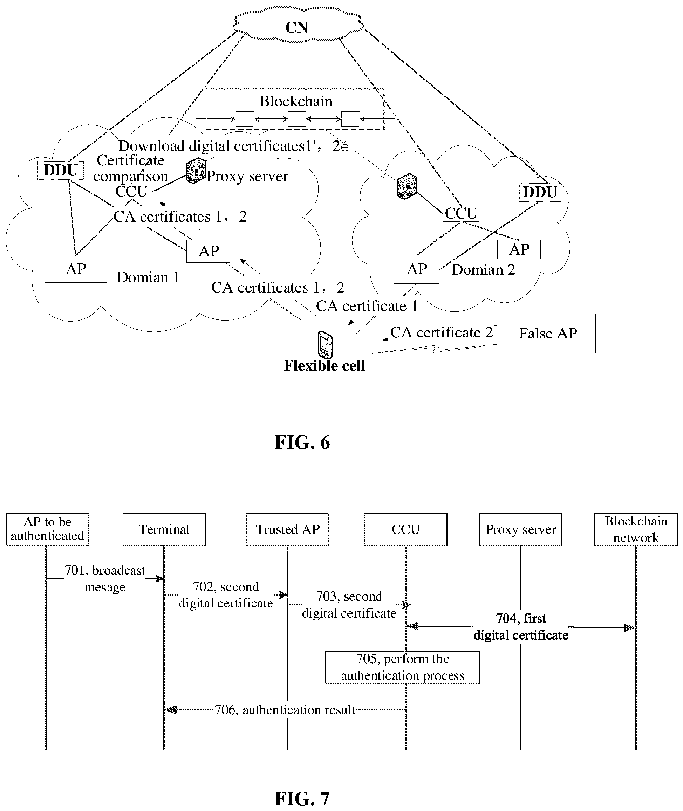

That is, the plug-and-play AP authentication scenario is shown in FIG. 6. Due to the mobility of the user (terminal), the AP in the domain 2 needs to join the flexible cell to serve the terminal, and therefore, in order to authenticate the legitimacy of the newly added AP, the domain 1 trusted by the terminal needs to authenticate the newly added AP. The CCU in each domain sends the digital certificate of the AP in the respective domain to the blockchain for storage through the proxy server, and the authentication information of each AP is not tampered based on the non-tampering performance and the consensus mechanism of the blockchain. The scenario shown in FIG. 6 may be referred to as cross-domain authentication.

FIG. 7 is a flowchart of an access point authentication method according to an embodiment of the present disclosure. With reference to FIG. 7, the process may include:
Step 701: a to-be-authenticated AP sends a to-be-authenticated digital certificate (that is, a second digital certificate, and digital certificates 1 and 2 in FIG. 6) through a broadcast message.
Step 702: due to the mobility of the terminal, the dynamic update of the flexible cells needs to be performed, and the terminal obtains the second digital certificate of the to-be-authenticated AP through the broadcast message sent by the to-be-authenticated AP, and sends the second digital certificate to the trusted AP.
Step 703: the trusted AP (i.e. the second AP) sends the second digital certificate to the CCU in the trusted domain.
Step 704: the CCU in the trusted domain obtains the first digital certificate of the to-be-authenticated AP from the blockchain through the blockchain proxy server (the digital certificates 1', 2' in FIG. 6).
   Specifically, the CCU in the trusted domain requests to the proxy server to obtain the first digital certificate of the to-be-authenticated AP, and the proxy server downloads the first digital certificate from the blockchain. Then, the proxy server sends the first digital certificate obtained from the blockchain to the CCU.
Step 705: the CCU in the trusted domain performs an authentication process, that is, determines whether the to-be-authenticated AP is a legitimate AP by comparing the second digital certificate sent by the to-be-authenticated AP with the first digital certificate downloaded from the blockchain, to obtain an authentication result. For example, if the second digital certificate is consistent with the first digital certificate, it is determined that the to-be-authenticated AP is legitimate; otherwise, the to-be-authenticated AP is illegal.
Step 706: the CCU in the trusted domain sends the authentication result to the terminal.

Then, the terminal may select, based on the authentication result, whether to access the to-be-authenticated AP.

In this embodiment of the present disclosure, the hash value is used, that is, the CCU in each domain sends the hash value of the digital certificate of the AP in the respective domain to the blockchain for storage through the proxy server. Due to the fact that the digital certificate stored on the blockchain is not a complete digital certificate but is a hash value, the requirement for the storage capability of the server on which the blockchain is deployed is reduced. A scenario to which the embodiment is applicable is still shown in FIG. 6. Differently, in this embodiment, the CCU obtains the digital certificate hash value from the blockchain, and the authentication process is also to compare the digital certificate hash value.

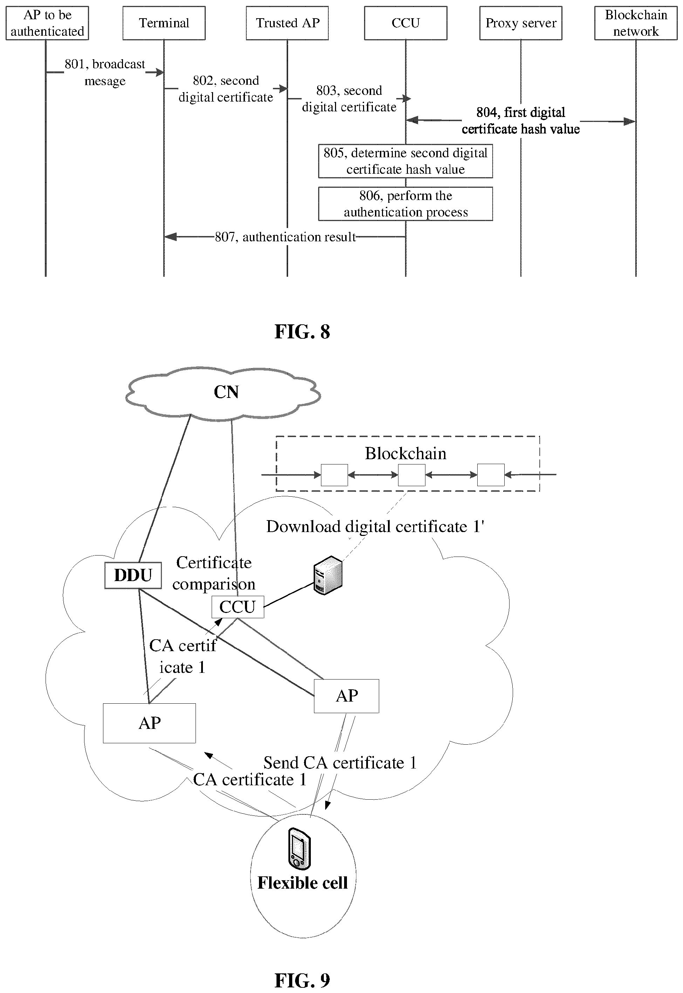

FIG. 8 is a flowchart of an access point authentication method according to an embodiment of the present disclosure. With reference to FIG. 8, the process may include:
Step 801: a to-be-authenticated AP sends a to-be-authenticated digital certificate (that is, a second digital certificate) through a broadcast message.
Step 802: due to the mobility of the terminal, the dynamic update of the Flexible Cell needs to be performed, and the terminal obtains the second digital certificate of the to-be-authenticated AP through the broadcast message sent by the to-be-authenticated AP, and sends the second digital certificate to the trusted AP.
Step 803: the trusted AP (i.e., the second AP) sends the second digital certificate to the CCU in the trusted domain.
Step 804: the CCU in the trusted domain obtains the first digital certificate hash value of the to-be-authenticated AP from the blockchain through the blockchain proxy server.
   Specifically, the CCU in the trusted domain requests to the proxy server to obtain the first digital certificate hash value of the to-be-authenticated AP, and the proxy server obtains the first digital certificate hash value from the blockchain. Then, the proxy server sends the first digital certificate hash value obtained from the blockchain to the CCU.
Step 805: the CCU in the trusted domain calculates a hash value of the second digital certificate to obtain a hash value of the second digital certificate.
Step 806: the CCU in the trusted domain performs an authentication process, that is, determines, by comparing the second digital certificate hash value and the first digital certificate hash value, whether the to-be-authenticated AP is a valid AP, to obtain an authentication result. For example, if the second digital certificate hash value is consistent with the first digital certificate hash value, it is determined that the to-be-authenticated AP is legal; otherwise, the to-be-authenticated AP is illegal.
Step 807: the CCU in the trusted domain sends the authentication result to the terminal.

Then, the terminal may select, based on the authentication result, whether to access the to-be-authenticated AP.

FIG. 9 is a schematic diagram of a scenario according to an embodiment of the present disclosure. In this scenario, when the AP newly added to the flexible cell is an intra-domain AP, the newly added AP needs to be authenticated in the domain. The to-be-authenticated AP broadcasts the digital certificate of the to-be-authenticated AP through the broadcast message, and the terminal sends the digital certificate of the to-be-authenticated AP to the CCU through the trusted AP for authentication. Specifically, the authentication process in this scenario may refer to the authentication process of the embodiment shown in FIG. 7 or FIG. 8.

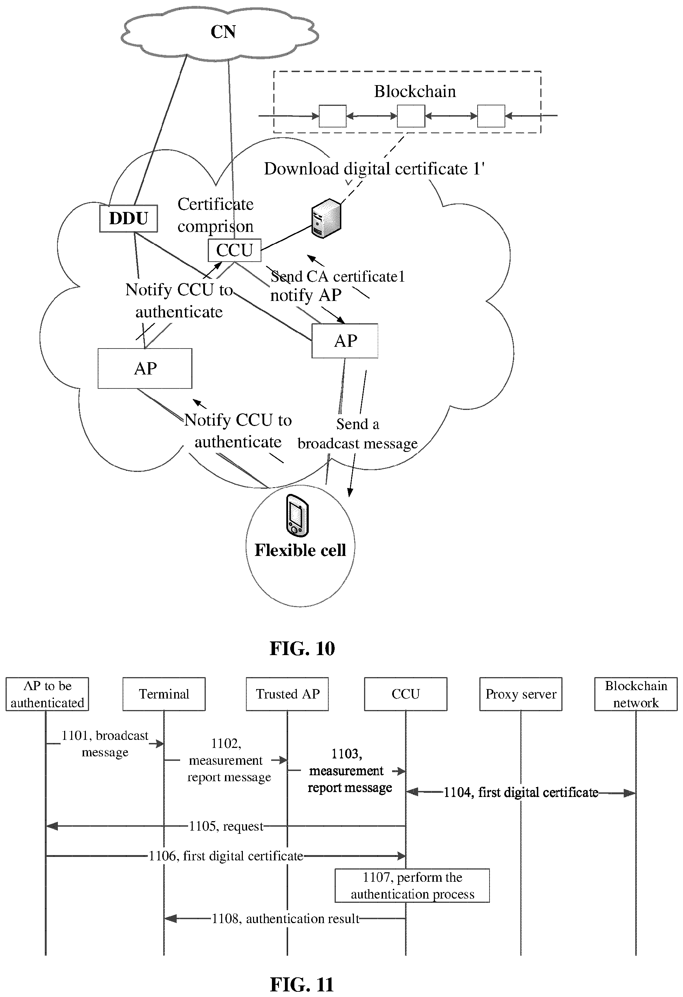

FIG. 10 is a schematic diagram of a scenario according to an embodiment of the present disclosure. In this scenario, the terminal provides the information about the to-be-authenticated AP to the CCU through the measurement report message, and because the to-be-authenticated AP can access the CCU in the domain, the CCU may notify the to-be-authenticated AP to send the digital certificate to the CCU for authentication. FIG. 11 is a flowchart of an access point authentication method according to an embodiment of the present disclosure. With reference to FIG. 11, the process may include:
Step 1101: A to-be-authenticated AP sends a broadcast message to a terminal, which may indicate that the AP is a to-be-authenticated AP.
Step 1102: the terminal obtains information of the to-be-authenticated AP through a broadcast message sent by the to-be-authenticated AP, for example, an identifier. The terminal sends a measurement report message to the trusted AP (that is, the second AP).
Step 1103: the trusted AP (i.e. The second AP) forwards the measurement report message.
Step 1104: the CCU in the trusted domain obtains the first digital certificate of the to-be-authenticated AP from the blockchain through the blockchain proxy server.
   Specifically, the CCU in the trusted domain requests to the proxy server to obtain the first digital certificate of the to-be-authenticated AP, and the proxy server downloads the first digital certificate from the blockchain. Then, the proxy server sends the first digital certificate obtained from the blockchain to the CCU.
Step 1105: the CCU in the trusted domain sends a request to the to-be-authenticated AP to request the to-be-authenticated AP to provide the second digital certificate.
Step 1106: the to-be-authenticated AP provides the second digital certificate to the CCU in the trusted domain.
Step 1107: the CCU in the trusted domain performs an authentication process, that is, determines, by comparing the second digital certificate and the first digital certificate, whether the to-be-authenticated AP is a legitimate AP, to obtain an authentication result. For example, if the second digital certificate is consistent with the first digital certificate, it is determined that the to-be-authenticated AP is legal; otherwise, the to-be-authenticated AP is illegal.
Step 1108: the CCU in the trusted domain sends the authentication result to the terminal.

Then, the terminal may select, based on the authentication result, whether to access the to-be-authenticated AP.

In another scenario of the embodiments of the present disclosure, two core networks are involved, and cross-network authentication needs to be performed on the AP. Different core networks represent different domains. In this scenario, the CCU or the core network device may be used for authentication.

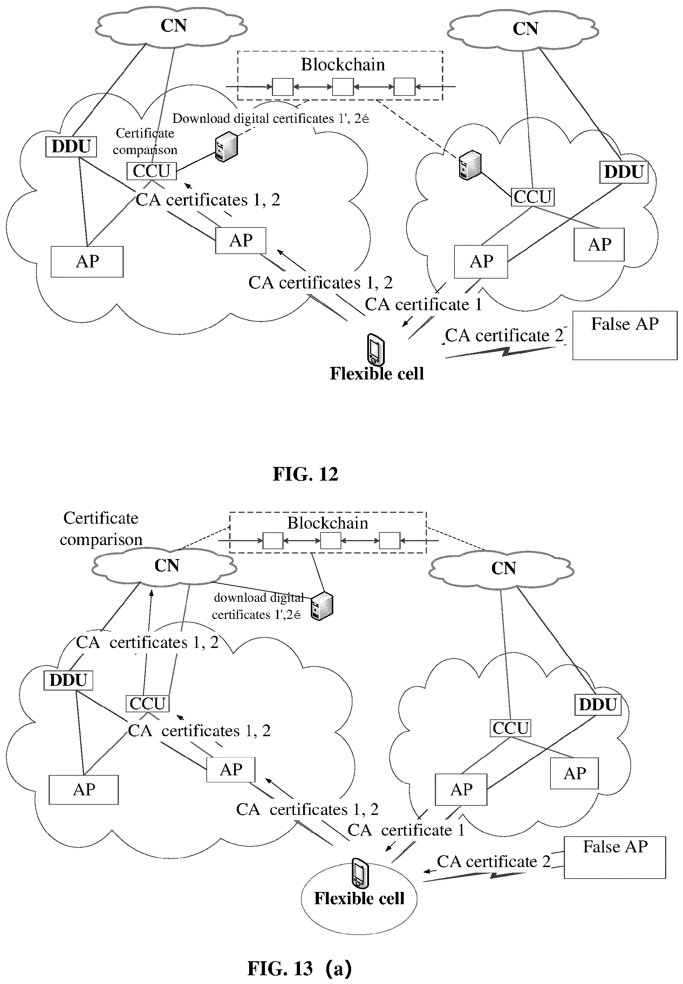

FIG. 12 is a schematic diagram of a process of performing authentication by using a CCU. The CCU uploads the digital certificate of the AP within the domain to the chain. When the to-be-authenticated AP is authenticated, the digital certificate of the to-be-authenticated AP received from the terminal and the digital certificate downloaded from the blockchain network are compared for authentication. For a specific process, refer to the descriptions in the embodiments shown in FIG. 7 or FIG. 8.

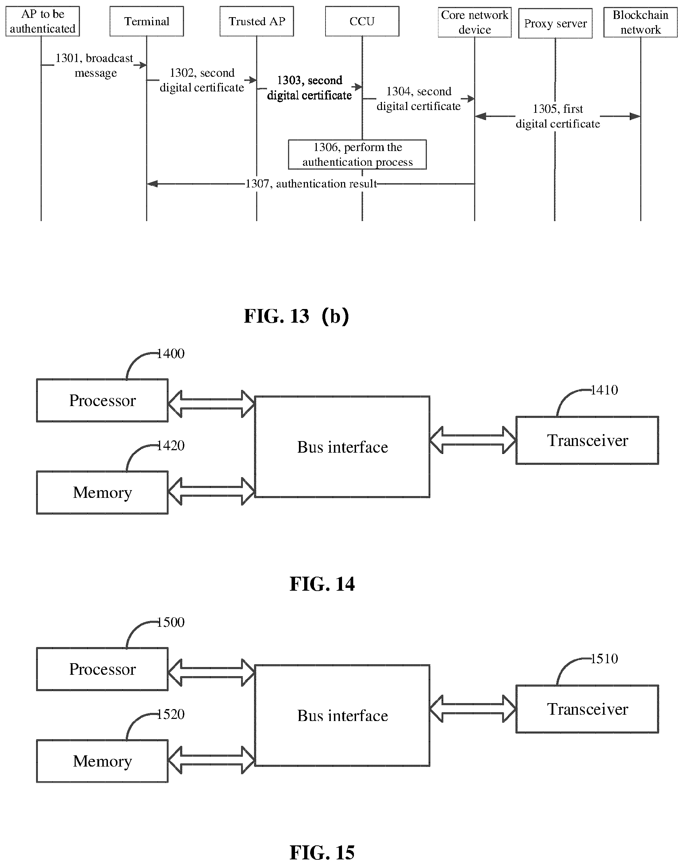

FIG. 13 (a) is a schematic diagram of a process of performing authentication by using a core network. The AP authentication is across different core networks, and authentication is performed at the core network device. The core network device uploads the digital certificate of the AP in the domain to the chain, and compares the digital certificate of the to-be-authenticated AP received from the terminal with the digital certificate downloaded from the blockchain network. Referring to FIG. 13 (b), a specific process may include:
Step 1301: the to-be-authenticated AP sends a to-be-authenticated digital certificate (that is, a second digital certificate) through a broadcast message.
Step 1302: due to the mobility of the terminal, the dynamic update of the Flexible Cell needs to be performed, and the terminal obtains the second digital certificate of the to-be-authenticated AP through the broadcast message sent by the to-be-authenticated AP, and sends the second digital certificate to the trusted AP.
Step 1303: the trusted AP (i.e., the second AP) sends the second digital certificate to the CCU in the trusted domain.
Step 1304: the CCU in the trusted domain sends the second digital certificate to the core network device.
Step 1305: the core network device obtains a first digital certificate of the to-be-authenticated AP from the blockchain through the blockchain proxy server.
Step 1306: the core network device performs an authentication process, that is, determines whether the to-be-authenticated AP is a legal AP by comparing the second digital certificate sent by the to-be-authenticated AP with the first digital certificate downloaded from the blockchain, to obtain an authentication result. For example, if the second digital certificate is consistent with the first digital certificate, it is determined that the to-be-authenticated AP is legal; otherwise, the to-be-authenticated AP is illegal.
Step 1307: the core network device sends the authentication result to the terminal through the CCU in the trusted domain.

Then, the terminal may select, based on the authentication result, whether to access the to-be-authenticated AP.

In this embodiment, after obtaining the second digital certificate, the core network device may alternatively obtain the first digital certificate hash value from the blockchain network. At the same time, the core network device calculates a second digital certificate hash value of the second digital certificate. In the authentication process, the core network device may compare the first digital certificate hash value with the second digital certificate hash value to obtain the authentication result. That is, in this manner, the digital certificate hash values are compared. If the two are consistent, the authentication result is that the authentication succeeds; otherwise, the authentication is not passed.

In this embodiment of the present disclosure, the CCU or the core network device is used to authenticate the to-be-authenticated AP based on the authentication information obtained from the blockchain to obtain the authentication result, thereby simplifying the signaling interaction process and reducing the network delay. Meanwhile, the digital certificate of the AP is stored by using the blockchain, and the CCU or the core network device can access the blockchain network at any time to obtain the digital certificate of the AP, so that the problem of cross-domain authentication of the AP can be solved.

The technical solutions provided in the embodiments of the present disclosure may be applicable to various systems, especially 5G systems. For example, the applicable system may be a Global System of Mobile Communication (GSM) system, a Code Division Multiple Access (CDMA) system, a Wideband Code Division Multiple Access (WCDMA) system, a Long Term Evolution (LTE) system, a Long Term Evolution Advanced (LTE-A) system, a Universal Mobile Telecommunication System (UMTS), a Worldwide Interoperability for Microwave Access (LTE-A) system, a 5G new radio (NR) system, and the like. The plurality of systems each include a terminal device and a network device. The system may further include a core network part, for example, an Evolved Packet System (EPS), a 5G system (5G System, 5 GS), and the like.

The terminal device in the embodiments of the present disclosure may be a device that provides voice and/or data connectivity to a user, a handheld device having a wireless connection function, or another processing device connected to a wireless modem. In different systems, the name of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, devices such as a Personal Communication Service (PCS) phone, a cordless phone, a Session Initiated Protocol (SIP) phone, a Wireless Local Loop (WLL) station, and a personal digital assistant (PDA). The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

As shown in FIG. 14, an access point authentication apparatus according to an embodiment of the present disclosure is applied to a CCU, and includes: a processor 1400, configured to read a program in a memory 1420 to perform the following processes:
obtaining second authentication information of a first AP;
obtaining first authentication information of the first AP from an authentication information storage device;
authenticating the first AP according to the second authentication information and the first authentication information to obtain an authentication result; and
sending the authentication result to a terminal

The transceiver 1410 is configured to receive and send data under the control of the processor 1400.

In FIG. 14, the bus architecture may include any number of interconnected buses and bridges, and specifically, various circuits of one or more processors represented by the processor 1400 and a memory represented by the memory 1420 are linked together. The bus architecture may also link various other circuits, such as a peripheral device, a voltage regulator, and a power management circuit, which are well known in the art, and therefore are not further described herein. The bus interface provides an interface. The transceiver 1410 may be a plurality of elements, that is, include a transmitter and a receiver, and provide units for communicating with various other apparatuses on a transmission medium. The processor 1400 is responsible for managing the bus architecture and general processing, and the memory 1420 may store data used by the processor 1400 when performing operations.

The processor 1400 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor 1400 is responsible for managing the bus architecture and general processing, and the memory 1420 may store data used by the processor 1400 when performing operations.

In some embodiments, the second authentication information comprises a second digital certificate or a second digital certificate hash value; and the processor 1400 is further configured to read the program, and perform the following steps:
receiving a first request from the terminal through a second AP, wherein the first request carries the second authentication information, and the second authentication information includes a second digital certificate of the first AP; or
receiving a measurement report message from the terminal through a second AP; obtaining a second digital certificate of the first AP from the first AP according to the measurement report message; or
receiving the first request from the terminal through a second AP, wherein the first request carries the second authentication information, and the second authentication information includes a second digital certificate of the first AP; determining a second digital certificate hash value of the second digital certificate; wherein the second AP is an authenticated AP.

In some embodiments, the first authentication information includes a first digital certificate or a first digital certificate hash value; and the processor 1400 is further configured to read the program, and perform the following steps:
obtaining a first digital certificate of the first AP from the authentication information storage device; or
obtaining a first digital certificate hash value of the first AP from the authentication information storage device.

In some embodiments, the second authentication information includes a second digital certificate of the first AP, and the first authentication information includes a first digital certificate of the first AP; and the processor 1400 is further configured to read the program, and perform the following steps: comparing the first digital certificate with the second digital certificate to obtain the authentication result.

In some embodiments, the second authentication information includes a second digital certificate hash value of the first AP, and the first authentication information includes a first digital certificate hash value of the first AP; and the processor 1400 is further configured to read the program, and perform the following steps: comparing the first digital certificate hash value with the second digital certificate hash value to obtain the authentication result.

The processor 1400 is further configured to read the program, and perform the following steps: storing a digital certificate and/or a digital certificate hash value of a AP in a domain corresponding to the CCU or the core network device into the authentication information storage device.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

As shown in FIG. 15, an access point authentication apparatus according to an embodiment of the present disclosure is applied to a core network device, and includes: a processor 1500, configured to read a program in a memory 1520 to perform the following processes:
obtaining second authentication information of a first AP;
obtaining first authentication information of the first AP from an authentication information storage device;
authenticating the first AP according to the second authentication information and the first authentication information to obtain an authentication result; and sending the authentication result to a terminal

The transceiver 1510 is configured to receive and send data under the control of the processor 1500.

In FIG. 15, the bus architecture may include any number of interconnected buses and bridges, and specifically, various circuits of one or more processors represented by the processor 1500 and a memory represented by the memory 1520 are linked together. The bus architecture may also link various other circuits, such as a peripheral device, a voltage regulator, and a power management circuit, which are well known in the art, and therefore are not further described herein. The bus interface provides an interface. The transceiver 1510 may be a plurality of elements, that is, include a transmitter and a receiver, and provide units for communicating with various other apparatuses on a transmission medium. The processor 1500 is responsible for managing the bus architecture and general processing, and the memory 1520 may store data used by the processor 1500 when performing operations.

The processor 1500 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor 1500 is responsible for managing the bus architecture and general processing, and the memory 1520 may store data used by the processor 1500 when performing operations.

In some embodiments, the second authentication information includes a second digital certificate or a second digital certificate hash value; and the processor 1500 is further configured to read the program, and perform the following steps:
receiving a first request from the terminal through a second AP, wherein the first request carries the second authentication information, and the second authentication information includes a second digital certificate of the first AP; or
receiving the first request from the terminal through a second AP, wherein the first request carries the second authentication information, and the second authentication information includes a second digital certificate of the first AP; determining a second digital certificate hash value of the second digital certificate;
wherein the second AP is an authenticated AP.

In some embodiments, the first authentication information includes a first digital certificate or a first digital certificate hash value; and the processor 1500 is further configured to read the program, and perform the following steps:
obtaining a first digital certificate of the first AP from the authentication information storage device; or
obtaining a first digital certificate hash value of the first AP from the authentication information storage device.

In some embodiments, the second authentication information includes a second digital certificate of the first AP, and the first authentication information includes a first digital certificate of the first AP; and the processor 1500 is further configured to read the program, and perform the following steps: comparing the first digital certificate with the second digital certificate to obtain the authentication result.

In some embodiments, the second authentication information includes a second digital certificate hash value of the first AP, and the first authentication information includes a first digital certificate hash value of the first AP; and the processor 1500 is further configured to read the program, and perform the following steps: comparing the first digital certificate hash value with the second digital certificate hash value to obtain the authentication result.

In some embodiments, the processor 1500 is further configured to read the program, and perform the following steps:
storing a digital certificate and/or a digital certificate hash value of a AP in a domain corresponding to the CCU or the core network device into the authentication information storage device.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

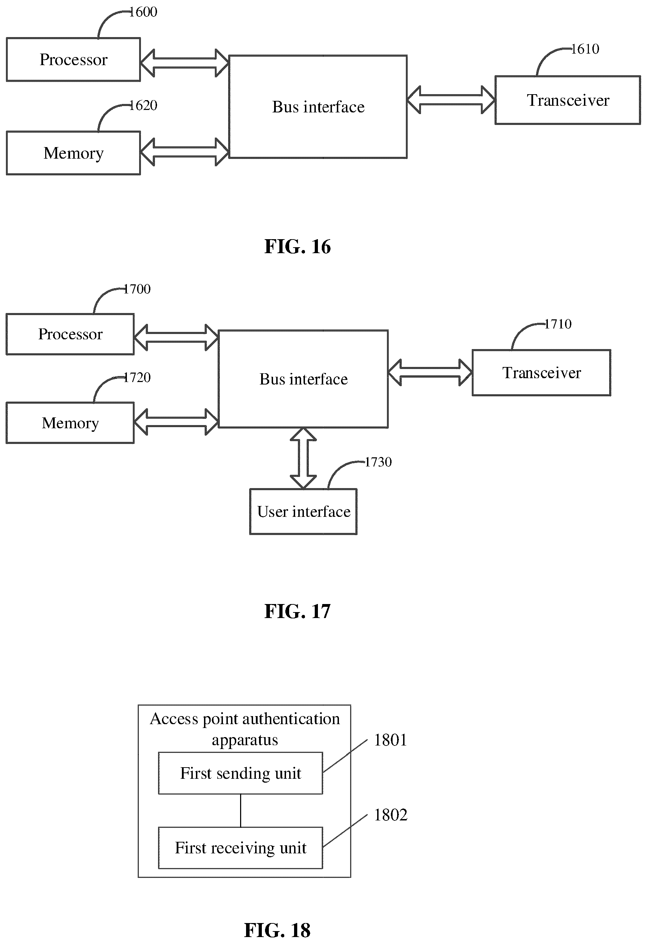

As shown in FIG. 16, an access point authentication apparatus according to an embodiment of the present disclosure is applied to a first AP, and includes: a processor 1600, configured to read a program in a memory 1620 to perform the following processes:
sending a second request to a terminal, wherein the second request is used to indicate that the first AP is a to-be-authenticated AP;
sending second authentication information to a terminal or a CCU, wherein the second authentication information is sent to the CCU or a core network device through the terminal, or directly sent to the CCU, and the CCU or the core network device authenticates the first AP based on the first authentication information obtained from the authentication information storage device.

The transceiver 1610 is configured to receive and send data under the control of the processor 1600.

In FIG. 16, the bus architecture may include any number of interconnected buses and bridges, which are specifically linked together by various circuits of one or more processors represented by the processor 1600 and a memory represented by the memory 1620. The bus architecture may also link various other circuits, such as a peripheral device, a voltage regulator, and a power management circuit, which are well known in the art, and therefore are not further described herein. The bus interface provides an interface. The transceiver 1610 may be a plurality of elements, that is, includes a transmitter and a receiver, and provides units for communicating with various other apparatuses on a transmission medium. The processor 1600 is responsible for managing the bus architecture and general processing, and the memory 1620 may store data used by the processor 1600 when performing operations.

The processor 1600 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor 1600 is responsible for managing the bus architecture and general processing, and the memory 1620 may store data used by the processor 1600 when performing operations.

The processor 1600 is further configured to read the program, and perform the following steps:
receiving a third request of the CCU;
sending the second authentication information to the CCU in response to the third request, wherein the second authentication information includes a second digital certificate of the first AP.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

As shown in FIG. 17, an access point authentication apparatus according to an embodiment of the present disclosure is applied to a terminal, and includes: a processor 1700, configured to read a program in a memory 1720 to perform the following processes:
sending a first request to a cloud control unit CCU or a core network device, wherein the first request is used to request the CCU or the core network device to authenticate a first access point AP;
receiving an authentication result of the first AP from the CCU or the core network device; wherein the authentication result is obtained by the CCU or the core network device through authenticating the first AP based on first authentication information obtained from an authentication information storage device.

The transceiver 1710 is configured to receive and send data under the control of the processor 1700.

In FIG. 17, the bus architecture may include any number of interconnected buses and bridges, and specifically, various circuits of one or more processors represented by the processor 1700 and a memory represented by the memory 1720 are linked together. The bus architecture may also link various other circuits, such as a peripheral device, a voltage regulator, and a power management circuit, which are well known in the art, and therefore are not further described herein. The bus interface provides an interface. The transceiver 1710 may be a plurality of elements, that is, include a transmitter and a receiver, and provide units for communicating with various other apparatuses on a transmission medium. For different user equipment, the user interface 1730 may also be an interface capable of being externally connected to a device needing to be internally connected, and the connected device includes but is not limited to a keypad, a display, a speaker, a microphone, a joystick, and the like.

The processor 1700 is responsible for managing the bus architecture and general processing, and the memory 1720 may store data used by the processor 1700 when performing operations.

The processor 1700 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor invokes the computer program stored in the memory, and is configured to perform any one of the methods provided in the embodiments of the present disclosure according to the obtained executable instruction. The processor and the memory may also be physically separated.

The processor 1700 is further configured to read the program, and perform the following steps:
sending the first request to the CCU or the core network device through a second AP, wherein the first request carries second authentication information, and the second authentication information includes a second digital certificate of the first AP; or
sending a measurement report message to the CCU through a second AP, wherein the first request includes the measurement report message; wherein the second AP is an authenticated AP

The processor 1700 is further configured to read the program, and perform the following steps: obtaining the second digital certificate from the first AP.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

As shown in FIG. 18, an access point authentication apparatus according to an embodiment of the present disclosure is applied to a terminal and includes: a first sending unit 1801, configured to send a first request to a cloud control unit CCU or a core network device, wherein the first request is used to request the CCU or the core network device to authenticate a first access point AP; a first receiving unit 1802 configured to receive an authentication result of the first AP from the CCU or the core network device; wherein the authentication result is obtained by the CCU or the core network device through authenticating the first AP based on first authentication information obtained from an authentication information storage device.

In some embodiments, the first sending unit is configured to: send the first request to the CCU or the core network device through a second AP, wherein the first request carries second authentication information, and the second authentication information includes a second digital certificate of the first AP; or send a measurement report message to the CCU through a second AP, wherein the first request includes the measurement report message; wherein the second AP is an authenticated AP.

In some embodiments, the apparatus may further include a first obtaining unit, configured to obtain the second digital certificate from the first AP.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

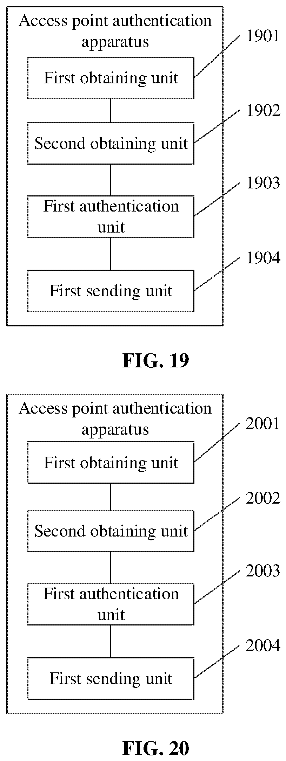

As shown in FIG. 19, an access point authentication apparatus according to an embodiment of the present disclosure is applied to a CCU, and includes: a first obtaining unit 1901, configured to obtain second authentication information of the first AP; a second obtaining unit 1902, configured to obtain first authentication information of the first AP from an authentication information storage device; a first authentication unit 1903, configured to authenticate the first AP according to the second authentication information and the first authentication information to obtain an authentication result; and a first sending unit 1904, configured to send the authentication result to the terminal.

In some embodiments, the second authentication information includes a second digital certificate or a second digital certificate hash value; and the first obtaining unit is configured to: receive a first request from the terminal through a second AP, wherein the first request carries the second authentication information, and the second authentication information includes a second digital certificate of the first AP; or receive a measurement report message from the terminal through a second AP; obtain a second digital certificate of the first AP from the first AP according to the measurement report message; or receive the first request from the terminal through a second AP, wherein the first request carries the second authentication information, and the second authentication information includes a second digital certificate of the first AP; determine a second digital certificate hash value of the second digital certificate; wherein the second AP is an authenticated AP.

In some embodiments, the first authentication information includes a first digital certificate or a first digital certificate hash value; and the second obtaining unit is configured to: obtain a first digital certificate of the first AP from the authentication information storage device; or obtain a first digital certificate hash value of the first AP from the authentication information storage device.

In some embodiments, the second authentication information includes a second digital certificate of the first AP, and the first authentication information includes a first digital certificate of the first AP; and the first authentication unit is configured to compare the first digital certificate with the second digital certificate to obtain the authentication result.

In some embodiments, the second authentication information includes a second digital certificate hash value of the first AP, and the first authentication information includes a first digital certificate hash value of the first AP; and the first authentication unit is configured to compare the first digital certificate hash value with the second digital certificate hash value to obtain the authentication result.

In some embodiments, the apparatus may further include: a storage unit, configured to store the digital certificate and/or the digital certificate hash value of the AP in the domain corresponding to the CCU to the authentication information storage device.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

As shown in FIG. 20, an access point authentication apparatus according to an embodiment of the present disclosure is applied to a core network device, and includes: a first obtaining unit 2001, configured to obtain second authentication information of a first AP; a second obtaining unit 2002, configured to obtain first authentication information of the first AP from an authentication information storage device; a first authentication unit 2003, configured to authenticate the first AP according to the second authentication information and the first authentication information to obtain an authentication result; a first sending unit 2004, configured to send the authentication result to a terminal.

In some embodiments, the second authentication information includes a second digital certificate or a second digital certificate hash value; and the first obtaining unit is configured to: receive a first request from the terminal through a second AP, wherein the first request carries the second authentication information, and the second authentication information includes a second digital certificate of the first AP; or receive the first request from the terminal through a second AP, wherein the first request carries the second authentication information, and the second authentication information includes a second digital certificate of the first AP; determine a second digital certificate hash value of the second digital certificate; wherein the second AP is an authenticated AP.

In some embodiments, the first authentication information includes a first digital certificate or a first digital certificate hash value; and the second obtaining unit is configured to: obtain a first digital certificate of the first AP from the authentication information storage device; or obtain a first digital certificate hash value of the first AP from the authentication information storage device.

In some embodiments, the second authentication information includes a second digital certificate of the first AP, and the first authentication information includes a first digital certificate of the first AP; and the first authentication unit is configured to compare the first digital certificate with the second digital certificate to obtain the authentication result.

In some embodiments, the second authentication information includes a second digital certificate hash value of the first AP, and the first authentication information includes a first digital certificate hash value of the first AP; and the first authentication unit is configured to compare the first digital certificate hash value with the second digital certificate hash value to obtain the authentication result.

In some embodiments, the apparatus may further include: a storage unit, configured to store the digital certificate and/or the digital certificate hash value of the AP in the domain corresponding to the core network device to the authentication information storage device.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

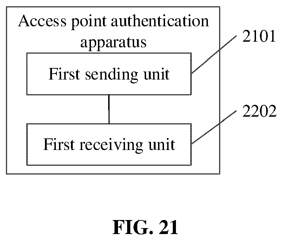

As shown in FIG. 21, an access point authentication apparatus according to an embodiment of the present disclosure is applied to a first AP, and includes: a first sending unit 2101, configured to send a second request to a terminal, wherein the second request is used to indicate that the first AP is an AP to be authenticated; a second sending unit 2102, configured to send second authentication information to a terminal or a CCU, wherein the second authentication information is sent to the CCU or a core network device through the terminal, or directly sent to the CCU, and the CCU or the core network device authenticates the first AP based on the first authentication information obtained from the authentication information storage device.

In some embodiments, the second sending unit is configured to: receive a third request of the CCU; and send the second authentication information to the CCU in response to the third request, where the second authentication information includes a second digital certificate of the first AP.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solution may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

An embodiment of the present disclosure further provides a processor-readable storage medium, where a program is stored on a readable storage medium, and when the program is executed by a processor, each process of the foregoing access point authentication method embodiment is implemented, and the same technical effect can be achieved. The readable storage medium may be any usable medium or data storage device accessible by a processor, including but not limited to a magnetic memory (for example, a floppy disk, a hard disk, a magnetic tape, a magneto-optical disk (DVD), a Blu-ray disk (BD), a high-definition versatile disk (EPROM), an electrically erasable programmable read-only memory (EEPROM), a non-volatile memory (NAND Flash), a solid state disk (Solid State Disk or Solid State Drive, SSD), etc.).

It should be noted that, in this specification, the terms "include", "comprise", or any other variant thereof are intended to cover non-exclusive inclusion, so that a process, method, article, or apparatus that includes a series of elements includes not only those elements, but also other elements that are not explicitly listed, or elements inherent to the process, method, article, or apparatus. In the absence of more restrictions, the statement " includes one. There are no additional identical elements in the process, method, article, or apparatus that includes the element.

Through the description of the foregoing implementations, a person skilled in the art may clearly understand that the method in the foregoing embodiments may be implemented by means of software plus a necessary general hardware platform, and certainly may also be implemented by hardware, but in many cases, the former is a better implementation. According to such an understanding, the technical solution of the present disclosure essentially or the part contributing to the related art may be embodied in the form of a software product, and the computer software product is stored in a storage medium (such as a ROM/RAM, a magnetic disk, and an optical disk), and includes several instructions for enabling a terminal (which may be a mobile phone, a computer, a server, an air conditioner, a network device, etc.) to perform the method according to the embodiments of the present disclosure.

It should be noted that it should be understood that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, a module may be a separately established processing element, or may be integrated in a chip of the foregoing apparatus, or may be stored in a memory of the apparatus in a form of program code, and a processing element of the foregoing apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the data used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A, B alone, C alone, and both A and B, both B and C exist, both A and C exist, and A, B and C both exist. Similarly, use of "at least one of A and B" in this specification and claims should be understood as "A alone, B alone, or both A and B".

The embodiments of the present disclosure are described above with reference to the accompanying drawings, but the present disclosure is not limited to the specific embodiments described above, and the specific embodiments described above are merely illustrative, rather than limiting, and a person of ordinary skill in the art can make many forms without departing from the spirit of the present disclosure and the scope of the claims, all of which are within the protection of the present disclosure.

## Claims

1. An access point authentication method applied to a terminal, wherein the method comprises:
sending a first request to a cloud control unit CCU or a core network device, wherein the first request is used to request the CCU or the core network device to authenticate a first access point AP; and
receiving an authentication result of the first AP from the CCU or the core network device; wherein the authentication result is obtained by the CCU or the core network device through authenticating the first AP based on first authentication information, the first authentication information is obtained from an authentication information storage device.

2. The access point authentication method according to claim 1, wherein the sending a first request to a CCU or a core network device comprises:
sending the first request to the CCU or the core network device through a second AP, wherein the first request carries second authentication information, and the second authentication information comprises a second digital certificate of the first AP; or
sending a measurement report message to the CCU through a second AP, wherein the first request comprises the measurement report message;
wherein the second AP is an authenticated AP.

3. The access point authentication method according to claim 2, further comprising:
obtaining the second digital certificate from the first AP.

4. An access point authentication method applied to a CCU or a core network device, the method comprising:
obtaining second authentication information of a first AP;
obtaining first authentication information of the first AP from an authentication information storage device;
authenticating the first AP according to the second authentication information and the first authentication information to obtain an authentication result; and
sending the authentication result to a terminal.

5. The access point authentication method according to claim 4, wherein the second authentication information comprises a second digital certificate or a second digital certificate hash value;
the obtaining the second authentication information of the first AP comprises:
receiving a first request from the terminal through a second AP, wherein the first request carries the second authentication information, and the second authentication information comprises a second digital certificate of the first AP; or
receiving a measurement report message from the terminal through a second AP; obtaining a second digital certificate of the first AP from the first AP according to the measurement report message; or
receiving the first request from the terminal through a second AP, wherein the first request carries the second authentication information, and the second authentication information comprises a second digital certificate of the first AP; determining a second digital certificate hash value of the second digital certificate;
wherein the second AP is an authenticated AP.

6. The access point authentication method according to claim 4, wherein the first authentication information comprises a first digital certificate or a first digital certificate hash value;
the obtaining the first authentication information of the first AP from the authentication information storage device comprises:
obtaining a first digital certificate of the first AP from the authentication information storage device; or
obtaining a first digital certificate hash value of the first AP from the authentication information storage device.

7. The access point authentication method according to claim 4, wherein the second authentication information comprises a second digital certificate of the first AP, and the first authentication information comprises a first digital certificate of the first AP;
the authenticating the first AP according to the second authentication information and the first authentication information to obtain an authentication result comprises:
comparing the first digital certificate with the second digital certificate to obtain the authentication result.

8. The access point authentication method according to claim 4, wherein the second authentication information comprises a second digital certificate hash value of the first AP, and the first authentication information comprises a first digital certificate hash value of the first AP;
the authenticating the first AP according to the second authentication information and the first authentication information to obtain an authentication result comprises:
comparing the first digital certificate hash value with the second digital certificate hash value to obtain the authentication result.

9. The access point authentication method according to claim 6, further comprising:
storing a digital certificate and/or a digital certificate hash value of a AP in a domain corresponding to the CCU or the core network device into the authentication information storage device.

10. The method according to any one of claims 4 to 9, wherein the authentication information storage device comprises a blockchain.

11. An access point authentication method applied to a first AP, the method comprising:
sending a second request to a terminal, wherein the second request is used to indicate that the first AP is A to-be-authenticated AP;
sending second authentication information to a terminal or a CCU, wherein the second authentication information is sent to the CCU or a core network device through the terminal, or directly sent to the CCU, and the CCU or the core network device authenticates the first AP based on the first authentication information obtained from the authentication information storage device.

12. The access point authentication method according to claim 11, wherein sending the second authentication information to the CCU comprises:
receiving a third request of the CCU;
sending the second authentication information to the CCU based on the third request, wherein the second authentication information comprises a second digital certificate of the first AP.

13. An access point authentication apparatus applied to a terminal, wherein the apparatus comprises a memory, a transceiver, and a processor, the memory is configured to store a computer program; the transceiver is configured to send and receive data under control of the processor; and the processor is configured to read the computer program in the memory and perform the following operations:
sending a first request to a cloud control unit CCU or a core network device, wherein the first request is used to request the CCU or the core network device to authenticate a first access point AP;
receiving an authentication result of the first AP from the CCU or the core network device; wherein the authentication result is obtained by the CCU or the core network device through authenticating the first AP based on first authentication information obtained from an authentication information storage device.

14. The access point authentication apparatus according to claim 13, wherein the processor is further configured to read the program, and perform the following steps:
sending the first request to the CCU or the core network device through a second AP, wherein the first request carries second authentication information, and the second authentication information comprises a second digital certificate of the first AP; or
sending a measurement report message to the CCU through a second AP, wherein the first request comprises the measurement report message;
wherein the second AP is an authenticated AP.

15. The access point authentication apparatus according to claim 14, wherein the processor is further configured to read the program, and perform the following steps:
obtaining the second digital certificate from the first AP.

16. An access point authentication apparatus applied to a CCU or a core network device, wherein the apparatus comprises a memory, a transceiver, and a processor, the memory is configured to store a computer program; the transceiver is configured to send and receive data under control of the processor; and the processor is configured to read the computer program in the memory and perform the following operations:
obtaining second authentication information of the first AP;
obtaining first authentication information of the first AP from an authentication information storage device;
authenticating the first AP according to the second authentication information and the first authentication information to obtain an authentication result;
sending the authentication result to a terminal.

17. The access point authentication apparatus according to claim 16, wherein the second authentication information comprises a second digital certificate or a second digital certificate hash value;
the processor is further configured to read the program, and perform the following steps:
receiving a first request from the terminal through a second AP, wherein the first request carries the second authentication information, and the second authentication information comprises a second digital certificate of the first AP; or
receiving a measurement report message from the terminal through a second AP; obtaining a second digital certificate of the first AP from the first AP according to the measurement report message; or
receiving the first request from the terminal through a second AP, wherein the first request carries the second authentication information, and the second authentication information comprises a second digital certificate of the first AP; determining a second digital certificate hash value of the second digital certificate;
wherein the second AP is an authenticated AP.

18. The access point authentication apparatus according to claim 16, wherein the first authentication information comprises a first digital certificate or a first digital certificate hash value;
the processor is further configured to read the program, and perform the following steps:
obtaining a first digital certificate of the first AP from the authentication information storage device; or
obtaining a first digital certificate hash value of the first AP from the authentication information storage device.

19. The access point authentication apparatus according to claim 16, wherein the second authentication information comprises a second digital certificate of the first AP, and the first authentication information comprises a first digital certificate of the first AP;
the processor is further configured to read the program, and perform the following steps:
comparing the first digital certificate with the second digital certificate to obtain the authentication result.

20. The access point authentication apparatus according to claim 16, wherein the second authentication information comprises a second digital certificate hash value of the first AP, and the first authentication information comprises a first digital certificate hash value of the first AP;
the processor is further configured to read the program, and perform the following steps:
comparing the first digital certificate hash value with the second digital certificate hash value to obtain the authentication result.

21. The access point authentication apparatus according to claim 18, wherein the processor is further configured to read the program, and perform the following steps:
storing a digital certificate and/or a digital certificate hash value of a AP in a domain corresponding to the CCU or the core network device into the authentication information storage device.

22. The apparatus according to any one of claims 16 to 21, wherein the authentication information storage device comprises a blockchain.

23. An access point authentication apparatus applied to a first AP, wherein the apparatus comprises a memory, a transceiver, and a processor, the memory is configured to store a computer program; the transceiver is configured to send and receive data under control of the processor; and the processor is configured to read the computer program in the memory and perform the following operations:
sending a second request to a terminal, wherein the second request is used to indicate that the first AP is A to-be-authenticated AP;
sending second authentication information to a terminal or a CCU, wherein the second authentication information is sent to the CCU or a core network device through the terminal, or directly sent to the CCU, and the CCU or the core network device authenticates the first AP based on the first authentication information obtained from the authentication information storage device.

24. The access point authentication apparatus according to claim 23, wherein the processor is further configured to read the program, and perform the following steps:
receiving a third request of the CCU;
sending the second authentication information to the CCU in response to the third request, wherein the second authentication information comprises a second digital certificate of the first AP.

25. An access point authentication apparatus applied to a terminal, wherein the apparatus comprises:
a first sending unit, configured to send a first request to a cloud control unit CCU or a core network device, wherein the first request is used to request the CCU or the core network device to authenticate a first access point AP;
a first receiving unit, configured to receive an authentication result of the first AP from the CCU or the core network device; wherein the authentication result is obtained by the CCU or the core network device through authenticating the first AP based on first authentication information obtained from an authentication information storage device.

26. The access point authentication apparatus according to claim 25, wherein the first sending unit is configured to:
send the first request to the CCU or the core network device through a second AP, wherein the first request carries second authentication information, and the second authentication information comprises a second digital certificate of the first AP; or
send a measurement report message to the CCU through a second AP, wherein the first request comprises the measurement report message;
wherein the second AP is an authenticated AP.

27. The access point authentication apparatus according to claim 26, further comprising:
a first obtaining unit, configured to obtain the second digital certificate from the first AP.

28. An access point authentication apparatus applied to a CCU or a core network device, the apparatus comprising:
a first obtaining unit, configured to obtain second authentication information of a first AP;
a second obtaining unit, configured to obtain first authentication information of the first AP from an authentication information storage device;
a first authentication unit, configured to authenticate the first AP according to the second authentication information and the first authentication information to obtain an authentication result;
a first sending unit, configured to send the authentication result to a terminal.

29. The access point authentication apparatus according to claim 28, wherein the second authentication information comprises a second digital certificate or a second digital certificate hash value, and the first obtaining unit is configured to:
receive a first request from the terminal through a second AP, wherein the first request carries the second authentication information, and the second authentication information comprises a second digital certificate of the first AP; or
receive a measurement report message from the terminal through a second AP; obtain a second digital certificate of the first AP from the first AP according to the measurement report message; or
receive the first request from the terminal through a second AP, wherein the first request carries the second authentication information, and the second authentication information comprises a second digital certificate of the first AP; determine a second digital certificate hash value of the second digital certificate;
wherein the second AP is an authenticated AP.

30. The access point authentication apparatus according to claim 28, wherein the first authentication information comprises a first digital certificate or a first digital certificate hash value, and the second obtaining unit is configured to:
obtain a first digital certificate of the first AP from the authentication information storage device; or
obtain a first digital certificate hash value of the first AP from the authentication information storage device.

31. The access point authentication apparatus according to claim 28, wherein the second authentication information comprises a second digital certificate of the first AP, and the first authentication information comprises a first digital certificate of the first AP; and the first authentication unit is configured to compare the first digital certificate with the second digital certificate to obtain the authentication result.

32. The access point authentication apparatus according to claim 28, wherein the second authentication information comprises a second digital certificate hash value of the first AP, and the first authentication information comprises a first digital certificate hash value of the first AP; and the first authentication unit is configured to compare the first digital certificate hash value with the second digital certificate hash value to obtain the authentication result.

33. The access point authentication apparatus according to claim 30, further comprising:
a storage unit, configured to store a digital certificate and/or a digital certificate hash value of a AP in a domain corresponding to the CCU or the core network device into the authentication information storage device.

34. An access point authentication apparatus applied to a first AP, the apparatus comprising:
a first sending unit, configured to send a second request to a terminal, wherein the second request is used to indicate that the first AP is A to-be-authenticated AP;
a second sending unit, configured to send second authentication information to a terminal or a CCU, wherein the second authentication information is sent to the CCU or a core network device through the terminal, or directly sent to the CCU, and the CCU or the core network device authenticates the first AP based on the first authentication information obtained from the authentication information storage device.

35. The access point authentication apparatus according to claim 34, wherein the second sending unit is configured to:
receive a third request of the CCU;
send the second authentication information to the CCU in response to the third request, wherein the second authentication information comprises a second digital certificate of the first AP.

36. A processor-readable storage medium, wherein the processor-readable storage medium stores a computer program, and the computer program is configured to cause a processor to execute the access point authentication method according to any one of claims 1 to 12.
